# EUROPÄISCHE PATENTSCHRIFT

(11) **EP 1 426 665 B1**
(45) Veröffentlichungstag und Bekanntmachung des Hinweises auf die Patenterteilung: **04.01.2006**
(21) Anmeldenummer: 03025363.7
(22) Anmeldetag: 04.11.2003
(51) Int. Cl.: F16K 11/07, F16K 35/00

(54) **Elektro-mechanische Verriegelungsvorrichtung**
Electro-mechanical locking device
Dispositif de verrouilage électro-mécanique

(30) Priorität: 06.12.2002 DE 10257204
(43) Veröffentlichungstag der Anmeldung: 09.06.2004
(73) Patentinhaber: Bosch Rexroth AG, 70184 Stuttgart (DE)
(72) Erfinder: Steprath, Werner, 41542 Dormagen (DE); Olbrich, Gottfried, 74343 Sachsenheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 537 440
- DE-A- 4 401 485
- US-A- 3 625 475
- US-A- 3 667 723
- US-A- 5 074 335

## Beschreibung

Die Erfindung betrifft eine Verriegelungsvorrichtung für Wegeventile nach dem Oberbegriff des Patentanspruchs 1.

Derartige Verriegelungsvorrichtungen werden häufig bei Traktoren zur Ansteuerung hydraulischer Ventile eingesetzt. Bekannte Verriegelungsvorrichtungen weisen eine mechanische Festlegeeinrichtung zum Festlegen eines Schiebers und eine Verschiebeeinrichtung zum Verschieben des Schiebers auf. Dabei wird der Schieber durch eine mechanische Wirkverbindung, meist ein Formschluß mit einem Rastelement, in seiner momentanen Position verriegelt und durch ein Beaufschlagen der' Festlegeeinrichtung mit einem hydraulischen oder mechanischen Signal in eine Freigabeposition überführt, so daß er bewegbar ist.

Nachteilig an diesen Lösungen ist, daß sie in Hinblick auf eine Anordnung in einem Ventilblock oder in Hinblick auf eine Ansteuerung sehr unflexibel sind. Dies beruht beispielsweise auf der notwendigen Mechanik bzw. den notwendigen hydraulischen Leitungen zur Ansteuerung der Festlegeeinrichtung mit dem Signal zur Aufhebung der Verriegelung, als auch auf der Platzintensität derartiger Ansteuerungssysteme. Des Weiteren sind - speziell die mechanischen Systeme - sehr wartungsintensiv. Ferner ist nachteilig, daß die Schieber nur in bestimmten, über das Rastelement definierten Positionen setzbar sind, so daß eine Feineinstellung der Wegeventil nicht gegeben ist.

Aufgabe der vorliegenden Erfindung ist es, eine Verriegelungsvorrichtung für Wegeventile zu schaffen, die die vorgenannten Nachteile beseitigt und einen verringerten vorrichtungstechnischen Aufwand aufweist.

Diese Aufgabe wird gelöst durch eine Verriegelungsvorrichtung für Wegeventile mit den Merkmalen nach dem Patentanspruch 1.

Die erfindurigsgemäße Verriegelungsvorrichtung zum Verschieben und Verriegeln eines Schiebers in einem Wegeventil sieht eine Verschiebeeinrichtung und eine mechanische Festlegeeinrichtung vor. Der Schieber ist über die Verschiebeeinrichtung in eine gewünschte Position bringbar und über die Festlegeeinrichtung in dieser Position festlegbar. Erfindungsgemäß ist die Wirkverbindung zwischen der Festlegeeinrichtung und dem Schieber über ein elektrisches Signal aufhebbar, so daß der Schieber verriegelt oder entriegelt wird.

Bevorzugterweise wirkt das elektrische Signal auf einen Elektromagneten, einen Torquemotor oder auf einen Servomotor, der bei Beaufschlagung eine Zustandsänderung erfährt und somit je nach Ausbildung der Festlegeeinrichtung eine verriegelung oder eine Entriegelung aufhebt.

Somit ist eine Verriegelungsvorrichtung geschaffen, die aufgrund ihrer elektrischen Ansteuerung zur Verriegelung bzw. Aufhebung einer Verriegelung flexibel einsetzbar ist. Die elektrische Ansteuerung erlaubt sowohl eine freie und platzsparende Anordnung in einem Ventilblock, als auch einen wartungsarmen Betrieb.

Eine bevorzugte Ausführungsform sieht einen Kipphebel vor, der in Grundstellung den Schieber freigibt und in Kippstellung den Schieber reibschlüssig festlegt.

Eine andere Ausführungsform sieht eine Spannhülse vor, die den Schieber reibschlüssig festlegt.

Bevorzugterweise ist die Spannhülse in einer Axialbohrung des Schiebers aufgenommen. In der Spannhülse ist ein Spanndorn mittels einer Feder vorgespannt, der über die Aktivierung bzw. Ansteuerung eines Elektromagneten gegen die Federkraft der, Feder in Freigabeposition oder Spannposition bringbar ist.

Dabei kann der Spanndorn sowohl mit einem Kegelabschnitt, als auch mit einer radialen Verjüngung zur Aufnahme von Spannkugeln ausgebildet sein.

Eine weitere bevorzugte Ausführungsform sieht vor, den Schieber über eine Relativverdrehung einer exzentrischen Welle in der Axialbohrung durch ein Klemmen mit einer exzentrischen Buchse festzulegen. Vorzugsweise ist die exzentrische Buchse mittels einer Feder vorgespannt und mittels Ansteuerung eines Torquemotors in eine Spannposition oder Freigabeposition überführbar.

Zur Reduzierung der zwischen der Welle und dem Schieber bei der Relativverdrehung wirkenden Reibung ist die Welle vorzugsweise in der Axialbohrung über eine zweite Buchse gelagert, die idealerweise gleichzeitig ein Verdrehen der exzentrischen Buchse verhindert.

Bevorzugterweise ist eine Verdrehsicherung vorgesehen, die ein Verdrehen des Schiebers im Wegeventilgehäuse verhindert.

Um die Freigangsstellung des Wegeventils einfach bestimmen zu können, ist es vorteilhaft, wenn ein mechanischer Druckpunkt vorgesehen ist, der beim Verschieben des Schiebers in die Freigangsstellung zu überwinden ist.

Des Weiteren ist es vorteilhaft, eine Sicherheitseinrichtung in Form eines Druckschalters in einer der Arbeitsleitungen anzuordnen, der ein hydraulisches Signal in ein elektrisches Signal überführt und beim Erreichen eines Schwellendrucks eine Verriegelung aufhebt, so daß der Schieber aufgrund der Federvorspannung durch zumindest eine Zentrierfeder selbständig eine Grundstellung einnehmen kann, in der der Druck abgebaut wird.

Besonders vorteilhaft ist es, wenn über die Betätigung eines Hauptschalters alle Verrieglungen aufhebbar sind und dadurch alle Wegeventile in ihre Grundstellung (fail-safe) gehen.

Sonstige vorteilhafte Ausführungsformen sind Gegenstand weiterer Unteransprüche.

Im Folgenden werden bevorzugte Ausführungsformen der Erfindung anhand schematischer Darstellungen näher erläutert. Es zeigen
Figur 1 eine schematische Darstellung eines Wegeventilsblocks mit einer erfindungsgemäßen Verriegelungsvorrichtung,
Figur 2 einen Längsschnitt durch eine erfindungsgemäße Festlegeeinrichtung mit einem Kipphebel an einem freien Endabschnitt eines Schiebers,
Figur 3 eine Detailldarstellung einer Lagerung des Kipphebels aus Figur 2 in Seitenansicht,
Figur 4 eine Vorderansicht des Kipphebels aus den Figuren 2 und 3,
Figur 5 einen Längsschnitt durch eine erfindungsgemäße Festlegeeinrichtung mit einer Spannhülse und einem Spanndorn in einem freien Endabschnitt eines Schiebers,
Figur 6 einen Querschnitt durch den freien Endabschnitt des Schiebers aus Figur 5,
Figur. 7 einen Längsschnitt durch eine erfindungsgemäße Festlegeeinrichtung mit einer Spannhülse und einem Spanndorn mit Spannkugeln in einem freien Endabschnitt eines Schiebers,
Figur 8 einen Querschnitt durch die Festlegeeinrichtung aus Figur 7,
Figur 9 einen Längsschnitt durch eine erfindungsgemäße Festlegeeinrichtung mit einer exzentrischen Welle in einem freien Endabschnitt eines Schiebers und
Figur 10 eine Detailldarstellung einer Verdrehsicherung aus Figur 9.

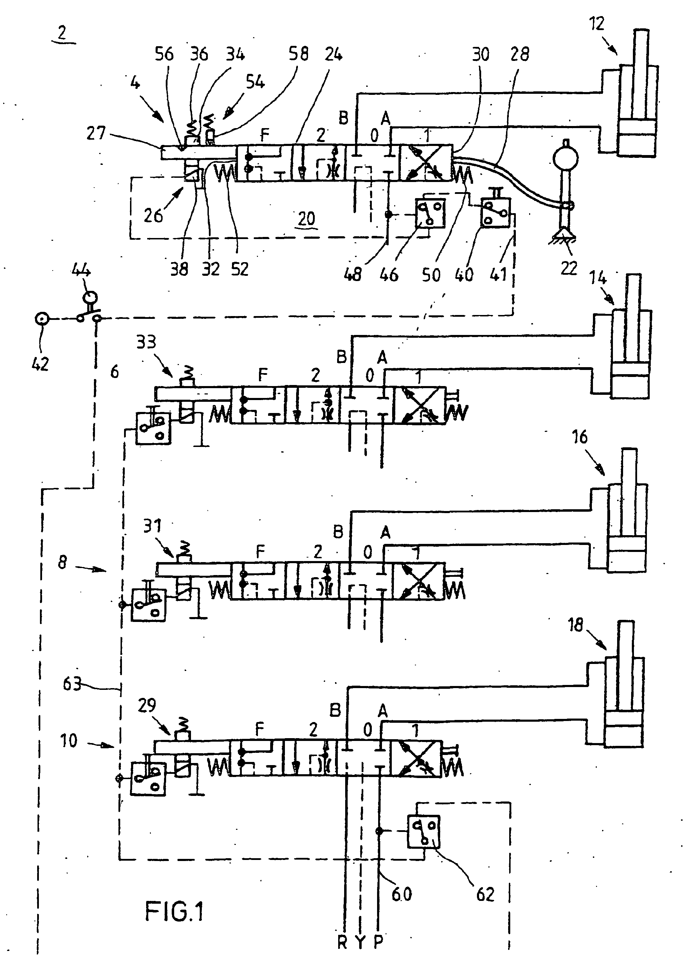

Figur 1 zeigt eine schematische Darstellung eines Wegeventilblocks 2 eines landwirtschaftlichen Nutzfahrzeugs mit vier Wegeventilen 4, 6, 8, 10, die jeweils zwischen einem Verbraucher in Form eines Hydraulikzylinders 12, 14, 16, 18 und einer Pumpe bzw. einem Tank (beide nicht dargestellt) angeordnet sind.

Derartige Anordnungen werden beispielsweise in der Mobilhydraulik zur Steuerung von Zusatzfunktionen wie ein Hubwerk bei Traktoren eingesetzt.

Das erste Wegeventil 4 hat eine erfindungsgemäße Verriegelungsvorrichtung 20 mit einer manuellen Verschiebeeinrichtung 22 zum Verschieben seines Schiebers 24 in eine beliebige Position und mit einer mechanischen Festlegeeinrichtung 26 zum Festlegen des Schiebers 24 in seiner momentanen Position. Der Schieber 24 ist mittels Zentrierfedern 50, 52 vorgespannt.

Die Verschiebeeinrichtung 22 ist als Handhabe, vorzugsweise als Hebel, ausgeführt und steht über einen Seilzug 28 mit einem ersten freien Endabschnitt 30 des Schiebers 24 in Verbindung.

Die Festlegeeinrichtung 26 ist gegenüberliegend an einer Aufnahme 27 eines zweiten freien Endabschnitt 32 des Schiebers 24 als mechanisch-elektrische Bremse 34 ausgeführt. Die Bremse setzt den Schieber 24 mittels einer durch eine Feder 36 aufgebrachte Federkraft reibschlüssig fest, wobei durch Beaufschlagung eines Elektromagneten 38 der Bremse 34 mit einem elektrischen Signal eine Kraft entgegen der Federkraft aufgebracht werden kann, die den Reibschluß aufhebt und der Schieber 24 somit verschiebbar ist. Das elektrische Signal wird durch Betätigung eines manuellen Schalters 40, der über eine Steuerleitung 41 mit einer elektrischen Energiequelle 42 in Verbindung steht und idealerweise in der Handhabe integriert ist, ausgelöst. Dadurch wird der Elektromagnet 38 der Festlegeeinrichtung 26 bestromt, so daß der Schieber 24 in eine Freigabeposition überführt und in dem Wegeventil 4 verschiebbar ist. Der gesamte elektrische Stromkreis ist über einen Hauptschalter 44 ein- bzw. ausschaltbar.

Es ist auch möglich, die Bremse 34 derart auszubilden, daß der Schieber 24 über eine Federkraft in eine Freigabeposition bewegt ist und durch Beaufschlagung des Elektromagneten 38 mit einem elektrisches Signal in eine Verriegelungsposition überführt wird. Generell gilt zu beachten, daß "Beaufschlagen" sowohl eine Bestromung als auch eine Nicht-Bestromung des Elektromagneten 38 bedeuten kann. D.h. "Beaufschlagen" deutet lediglich auf' eine elektrische Zustandsänderung des Elektromagneten 38 hin.

Des Weiteren ist das elektrische Signal auch in Abhängigkeit eines hydraulischen Druckschalter 46 auslösbar. Dieser Druckschalter 46 ist als Sicherungseinrichtung in einer -Arbeitsleitung 48 vorgesehen. Beim Erreichen eines voreingestellten Schwellendrucks, zum Beispiel wenn der Hydraulikzylinder 12 an seinen Endschlag fährt, spricht dieser an, so daß der Elektromagnet 38 mit einem elektrischen Signal beaufschlagt wird, die Festlegeeinrichtung 26 automatisch den Schieber 24 freigibt und dieser über seine Zentrierfedern 50, 52 in seine Grundstellung gebracht wird.

Zur Bestimmung einer definierten Verschiebepositionen ist an der Aufnahme 27 des Schiebers 24 eine mechanische Rasteinrichtung 54 vorgesehen, die ein federbeaufschlagtes in eine Rastnut 56 greifendes Rastelement 58 aufweist. Die Rasteinrichtung 54 arbeitet unabhängig von der Festlegeeinrichtung 26, so daß bei Freigabe des Schiebers 24 durch die Festlegeeinrichtung 26 der Schieber 24 festgelegt werden kann.

Das zweite, dritte und vierte Wegeventile 6, 8, 10 der Blockanordnung 2 können ebenfalls die erfindungsgemäße Verschiebeeinrichtung 22 sowie die bekannte Rasteinrichtung 54 aufweisen, jedoch ist aus Gründen der Verallgemeinerung auf diese verzichtet worden.

In einer Arbeitsleitung 60 des vierten Wegeventils 10 ist ein hydraulischer Druckschalter 62 angeordnet, der gemäß dem vorbeschriebenen hydraulischen Druckschalter 46 bei Messung eines Schwellendruck auf seine erfindungsgemäße Feststelleinrichtung 29 wirkt. Dabei steht dieser hydraulische Druckschalter 62 über eine Steuerleitung 63 mit erfindungsgemäßen Feststelleinrichtungen 31, 33 des zweiten und dritten Wegeventils 6, 8 in Wirkverbindung, so daß diese Feststelleinrichtungen 31, 33 ebenfalls mit dem elektrischen Signal beaufschlagt und somit gelöst werden, so daß die Wegeventile 6, 8, 10 gleichzeitig in die federvorgespannte Grundstellung übergehen.

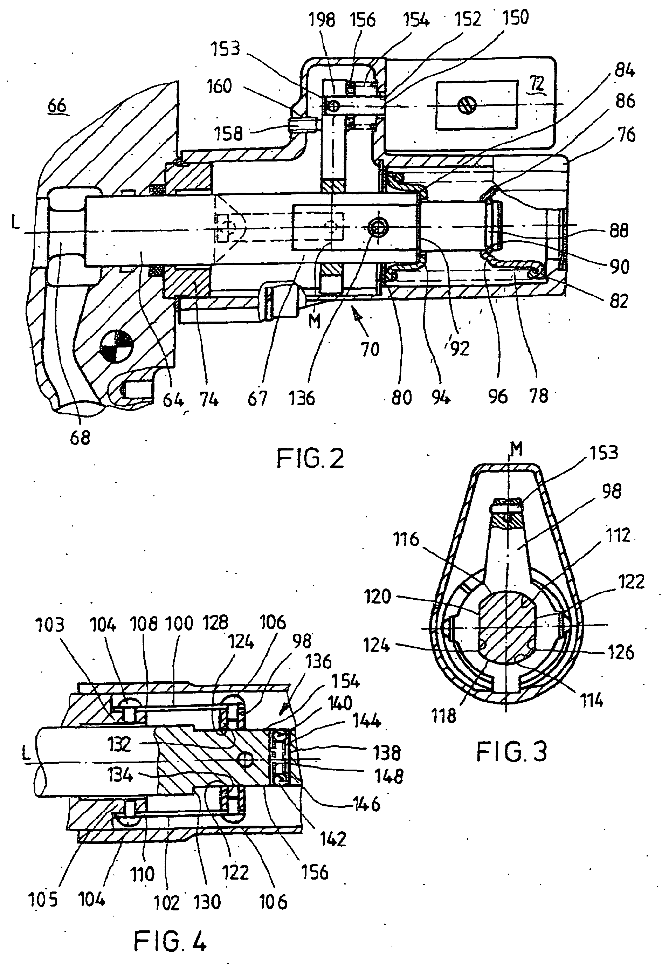

Figur 2 zeigt eine mechanische Festlegeeinrichtung 70, die an einem freien Endabschnitt 64 eines in einem Wegeventilgehäuse 66 angeordneten Schiebers 68 ausgebildet ist und mit einem Elektromagneten 72 in Wirkverbindung steht.

Der freie Endabschnitt 64 des Schiebers 68 kragt seitlich über das Wegeventilgehäuse 66 hervor und ist in einer über einen Adapter 74 am Wegeventilgehäuse 66 befestigten Federkappe 76 aufgenommen.

In der Federkappe 76 ist der Endabschnitt 64 über eine Zentrierfeder 78 vorgespannt. Die Zentrierfeder 78 erstreckt sich zwischen Federtellern 84, 86, die sich schieberseitig an einer Ringschulter 92 und einem in einer Ringnut 88 verlaufenden Sicherungsring 90 abstützen. Federkappenseitig liegt der linke Federteller 84 an einem Stützring 80 und die rechte Federteller 86 einer stirnseitigen Stützfläche 82 an.

Bei einer Bewegung des Schiebers 68 nach links wird der rechte Federteller 86 von dem Sicherungsring 90 mitgenommen und hebt sich von der rechten Stützfläche 82 der Federkappe 76 ab. Bei einer Bewegung des Schiebers 68 nach rechts wird der linke Federteller 86 von der Ringschulter 92 des Endabschnitts mitgenommen und hebt sich von dem linken Stützring 80 der Federkappe 76 ab. Somit wird bei jeder Längsverschiebung des Schiebers 68 mittels der manuellen Verschiebeeinrichtung (nicht dargestellt) aus der Grundstellung die Zentrierfeder 78 gespannt, so daß der Schieber 68 nach Lösen der mechanischen Feststelleinrichtung 70 selbständig durch eine Entspannung der Zentrierfeder 78 wieder in diese überführt wird.

Die mechanische Festlegeeinrichtung 70 weist einen Kipphebel 98 auf, der drehbar an dem Adapter 74 und somit am Wegeventilgehäuse 66 befestigt ist und einen Umfangsbereich 67 des freien Endabschnitts 64 umgreift. Drehbar gelagert bedeutet, daß der Kipphebel 98 keine translatorische Bewegung in axialer Richtung des Schiebers 68, sondern nur eine rotatorische Bewegung (Kippbewegung) um eine Drehachse D in Richtung der Längsachse L des Schiebers 68 ausführen kann. Dies wird durch die Lagerung des Kipphebels 98 über zwei diametral angeordnete, radial auskragende Laschen 100, 102 (Figur 4) an jeweils einer Befestigungsschulter 103, 105 des Adapters 74 erreicht, wobei jede Lasche 100, 102 mit einer Niete 104, 106 o. dgl. an der entsprechenden Befestigungsschulter 103, 105 und am Kipphebel 98 befestigt ist. Dabei sind die Laschen 100, 102 mit ihren adapterseitigen Befestigungsabschnitten 108, 110 so angeordnet, daß nur eine Drehbewegung um die von den kipphebelseitigen Nieten 106 gebildete Drehsachse D erfolgen kann. Somit ist der Kipphebel 98 um seine Drehachse D in Längsrichtung des Schiebers 68 kippbar, wobei seine maximale Kippstellung nach rechts durch ein Auflaufen seiner sich quer zur Hochachse H und in Längsrichtung des Schiebers 68 erstreckenden Reibflächen 112, 114 auf gegenüberliegende Umfangsflächen 116, 118 (Figur 3) des Schiebers 68 begrenzt ist.

Bevorzugterweise sind seitliche Außenumfangsflächen 120, 122 des freien Endabschnitt 66 des Schiebers 68, entlang derer der Kipphebel 98 gleiten kann, als parallel verlaufende Abflachungen ausgebildet. Die gegenüberliegenden Innenumfangsflächen 124, 126 des Kipphebels 98 sind entsprechend ausgebildet. Eine derartige Ausbildung der Außen- und Innenumfangsflächen 120, 122, 124, 126 hat die Vorteile, daß eine Verdrehung des Schiebers 68 im Wegeventilgehäuse 66 verhindert ist und zwei Hubbegrenzungsflächen 128, 130 (Figur 4) geschaffen sind; mittels derer eine Bewegung des Schiebers 68 nach rechts begrenzt ist. Bei einer Bewegung des Schiebers 68 nach rechts, laufen diese Hubbegrenzungsflächen 128, 130 auf gegenüberliegende Stirnflächen 132, 134 des Kipphebels 98 auf, so daß die schieberseitigen Federtellerflächen 94, 96 beabstandet sind. Somit sind unterschiedliche Hübe nach links und nach rechts realisiert, wobei bei dieser Ausführungsform ein Hub nach links größer als ein Hub nach rechts ist.

Zur Vereinfachung des Auffindens der Freigangsstellung F ist im Schieber 68 ein Druckelement 136 (Figur 4) angeordnet, daß bei jeder Bewegung des Schiebers 68 in bzw. aus seiner Freigangsstellung der Schieberbewegung einen mechanischen Druckpunkt entgegensetzt, der zu überwinden ist. Das Druckelement 136 erstreckt sich in einer Durchgangsbohrung 138 des Schiebers 68 etwa parallel zur Drehachse D des Kipphebels 98 und weist zwei Kugeln 140, 142 auf, die jeweils über eine Druckaufnahme 144, 146 in der Durchgangsbohrung 138 aufgenommen und über eine Druckfeder 148 voneinander beabstandet sind. Dabei reichen die Kugeln 140, 142 mit Kugelabschnitten 150, 152 über angrenzende Umfangsabschnitte 154, 156 des Schiebers 68 hervor, so daß bei einer Bewegung des Schiebers 68 in bzw. aus seiner Freigangsstellung diese auf den Kipphebel 98 auflaufen und bei Überwindung der Druckfederkraft die Kugeln 140, 142 in die Durchgangsbohrung 138 eintauchen und der Schieber 68 weiter bewegbar ist.

Der Elektromagnet 72 ist außerhalb der Federkappe 76 parallel zum Schieber 68 angeordnet (Figur 2). Sein Stößel 150 reicht durch eine Öffnung 152 der Federkappe 76 und ist mittels eines Bolzens 153 mit dem Kipphebel 98 drehbar verbunden. Entlang des Stößels 150 erstreckt sich eine Spiralfeder 154, die sich stirnseitig über eine Federaufnahme 156 am Kipphebel 98 und an der Federkappe 76 abstützt und somit den Kipphebel, 98 mit einer Federkraft beaufschlagt, die diesen in seiner Grundstellung, d.h. keine Kippbewegung und somit Freigabe des Schiebers 68, hält. Zur Justierung der Freigabeposition des Kipphebels 98 bzw. genauen Definition seiner Grundstellung ist gegenüber der Spiralfeder 154 eine Justierschraube 158 in einer Innengewindebohrung 160 der Federkappe 76 angeordnet, die sich stirnseitig am Kipphebel 98 abstützt und die durch Drehung die Neigung des Kipphebels 98 verändert.

Bei Bestromung des Elektromagneten 72 wird der Stößel 150 nach rechts bewegt, d.h. eingezogen, wodurch der Kipphebel 98 um seine Drehachse D gedreht wird und eine Kippstellung einnimmt. Gleichzeitig wird die Spiralfeder 154 durch das Einziehen des Stößels 150 gespannt. Die Reibflächen 112, 114 des Kipphebels 98 werden gegen die gegenüberliegenden Umfangsflächen 116, 118 des Schiebers 68 gepreßt, so daß der Schieber 68 durch den Reibschluß dieser Flächen 112, 114, 116, 118 festgelegt bzw. verriegelt ist. Wird die Bestromung des Elektromagneten 72 aufgehoben, entspannt sich die Spiralfeder 154 und drückt den Kipphebel 98, der den Stößel 150 mitnimmt, gegen die Justierschraube 158. Der Kipphebel 98 nimmt wieder seine Grundstellung ein und gibt den Schieber 68 frei, so daß dieser über die manuelle Verschiebeeinrichtung (nicht dargestellt) verschiebbar ist.

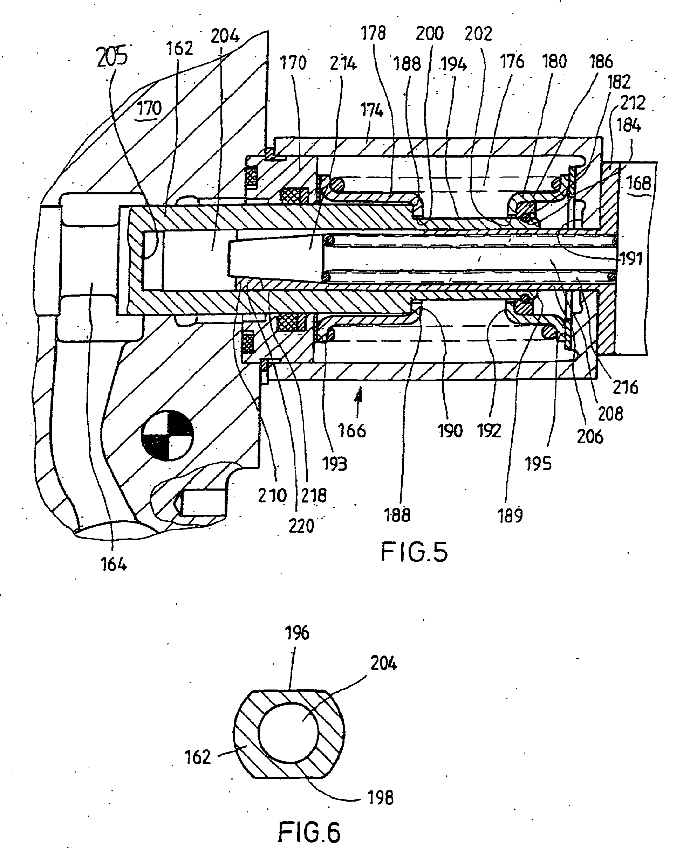

Figur 5 zeigt eine andere Ausführungsform einer Festlegeeinrichtung 166, die an einem freien Endabschnitts 162 eines Schieber 164 ausgebildet ist und mit einem Elektromagneten 168 in Wirkverbindung steht.

Der freie Endabschnitt 162 ist in einer über einen Adapter 170 am Wegeventilgehäuse 172, angeordneten Federkappe 174 aufgenommen und über eine Zentrierfeder 176 axial vorgespannt. Die Zentrierfeder 78 erstreckt sich zwischen Federtellern 178, 180, die sich schieberseitig an diametralen Ringflächenabschnitten 188 und an einem Stützring 186, der über einen in einer Ringnut 184 verlaufenden Sicherungsring 182 lagerfixiert ist, abstützen. Federkappenseitig liegen die Federteller 178, 180 an stirnseitigen Stützflächen 193, 195 an, wobei zumindest einer der Federteller 178, 180 verdrehgesichert ist.

Bei einer Bewegung des Schiebers 164 nach links wird ähnlich der vorschriebenen Ausführungsform nach Figur 2 die rechte Federkappe 180 von dem Stützring 186 mitgenommen, und bei einer Hubbewegung des Schiebers 164 nach rechts wird der linke Federteller 178 von den zwei diametralen Ringflächenabschnitten 188 des Schiebers 164 mitgenommen.

Dabei ist ein maximaler Hub nach links über ein Auflaufen schieberseitiger Federtellerflächen 190, 192 begrenzt, während ein maximaler Hub nach rechts über ein Auflaufen einer schieberseitigen Ringfläche 189 auf eine gegenüberliegende Ringstirnfläche 191 der Federkappe begrenzt ist. Da beim Anliegen der Ringstirnfläche 189 an der Ringfläche 191 die schieberseitiger Federtellerflächen 190, 192 beabstandet sind, ist somit ein größerer maximaler Hub nach links als nach rechts realisiert.

Bevorzugterweise ist ein von den Federtellern 178, 180 umgriffener Außenumfangsflächenabschnitt 194 des freien Endabschnitts 162 des Schiebers 164 derart radial zurückgestuft, daß sich zwei diametrale etwa parallel zueinander erstreckende Abflachungen 196, 198 (Figur 6) ergeben. Durch diese Abflachungen 196, 198 ist der Schieber 164 im umgriffenden Außenumfangsflächenabschnitt 194 nicht mehr kreisförmig, so daß durch eine entsprechende Gegenkontur der schieberseitigen Innenumfangsflächen 200, 202 der Federteller 178, 180 über diese eine Verdrehsicherung des Schiebers 164 im Wegeventilgehäuse 170 hergestellt ist. Gleichzeitig sind über die radiale Rückstufung bzw. diese Abflachungen 196, 198 die Ringflächenabschnitte 188 zur Mitnahme des linken Federtellers 178 bei einer Hubbewegung des Schiebers 164 nach rechts ausgebildet.

Stirnseitig weist der freie Endabschnitt 170 eine sich in Längsrichtung erstreckende Axialbohrung 204 auf, in der eine Spannhülse 206 und ein Spanndorn 208 der Festlegeeinrichtung 166 aufgenommen sind.

Die Spannhülse 206 hat einen innenkonusartigen Kopfabschnitt 210 und ist über einen Flansch 212, der rückseitig an der Federkappe 174 anliegt, an dieser befestigt.

Der Spanndorn 208 ist ein Stößel des Elektromagneten 168. Der Spanndorn 208 hat einen Kegelabschnitt 214, der in der Grundstellung durch einer sich zwischen dem Kegelabschnitt 214 und dem Elektromagneten 168 erstreckenden Spannfeder 216 in seiner Spannposition vorgespannt ist. Die Spannhülse 206 wird durch den Kegelabschnitt 214 des Spanndorns 208 im Bereich des innenkonusartigen Kopfabschnitts 210 gespreizt, wodurch zwischen einem Außenumfangsabschnitt 218 des innenkonusartigen Kopfabschnitts 210 der Spannhülse 206 und einem Innenumfangsabschnitt 220 des Schiebers eine reibschlüssige Verbindung hergestellt wird und somit der Schieber 164 in dem Wegeventilgehäuse 170 reibschlüssig festgelegt bzw. verriegelt ist.

Bei Bestromung des Elektromagneten 168 wird der Spanndorn 208 in Figur 5 eingezogen bzw. nach rechts bewegt, wodurch der Wirkeingriff zwischen dem Spanndorn 208 und der Spannhülse 206 gelöst und die Spannfeder 216 gespannt wird. Der Kraftschluß zwischen dem Spanndorn 208 und der Spannhülse 206 bzw. zwischen der Spannhülse 206 und dem Schieber 162 wird aufgehoben, so daß der Schieber 162 freigegeben ist und mittels einer manuellen Verschiebeeinrichtung (nicht dargestellt) bewegt werden kann. Wird die Bestromung dagegen unterbrochen, wird der Spanndorn 208 durch die Vorspannung der Spannfeder 216 wieder in seine Spannposition bzw. Grundstellung gebracht, so daß der Schieber 162 wieder verriegelt ist.

Es ist jedoch erwähnt, daß im Sinne einer kinematischen Umkehr durch eine entsprechende geänderte Anordnung der Spannfeder 216 der Spanndorn 208 in seiner Freigabeposition vorspannbar ist und über die Ansteuerung des Elektromagneten 168 in eine Spann- bzw. Verriegelungsposition überführbar ist. In diesem Fall ist die Spannfeder 216 auf der entgegengesetzten Seite des Kopfabschnitts 214 des Spanndorns 208 vorstellbar, wobei sie sich am Boden 205 der Axialbohrung 204 abstützt und stirnseitig am Spanndorn 208 angreift, so daß der Spanndorn 208 in Richtung des Elektromagneten 168 auf Druck belastet und aus dem Eingriff mit dem innenkonusartigen Kopfabschnitt 210 der Spannhülse 206 gebracht ist. Durch entsprechende Ansteuerung des Elektromagneten 168 wird der Spanndorn 208 entgegen der Federkraft der Spannfeder 216 in die Axialbohrung 204 eingetrieben und in Eingriff mit dem innenkonusartigen Kopfabschnitt' 210 der Spannhülse 206 gebracht, so daß der Schieber 164 festgesetzt ist.

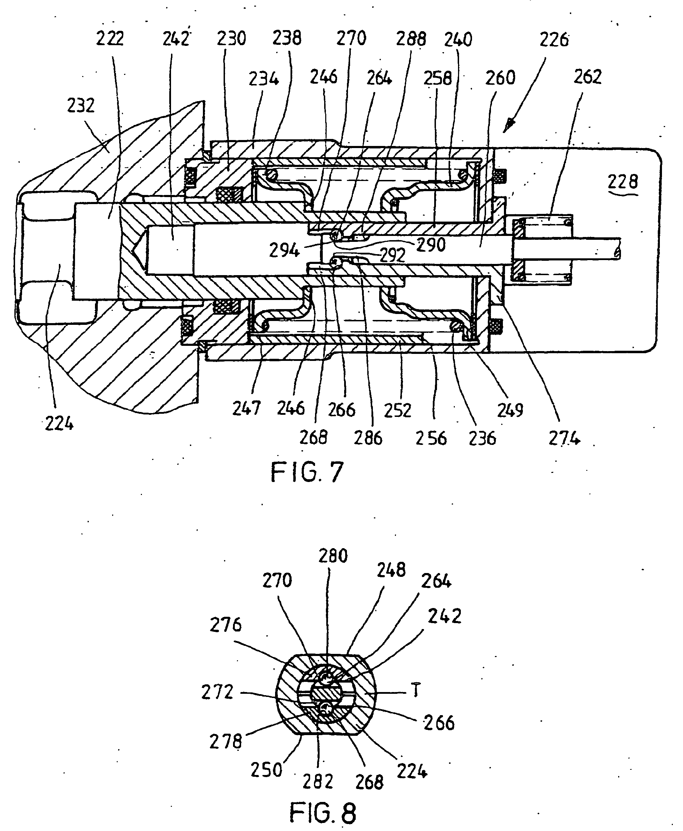

Figur 7 zeigt eine weitere Ausführungsform einer Festlegeeinrichtung 226, die an einem freien Endabschnitts 222 eines Schieber 224 ausgebildet ist und mit einem Elektromagneten 228 in Wirkverbindung steht.

Der freie Endabschnitt 222 ist in einer über einen Adapter 230 am Wegeventilgehäuse 232 angeordneten Federkappe 234 aufgenommen und über eine Zentrierfeder 236 axial vorgespannt. Die Zentrierfeder 2'36 erstreckt sich zwischen Federtellern 238, 240, die sich schieberseitig an diametralen Ringflächenabschnitten 246 und an einem in einer Ringnut (nicht dargestellt) geführten Sicherungsring 244 abstützen. Federkappenseitig liegen die Federteller 238, 240 an stirnseitigen Stützflächen 247, 249 an.

Bei einer Hubbewegung des Schiebers 224 nach links wird der rechte Federteller 240 von dem Sicherungsring 244 mitgenommen und bei einer Hubbewegung nach rechts wird der linke Federteller 238 von den Ringflächenabschnitten 246 mitgenommen. Dabei erfolgt eine Verdrehsicherung des Schiebers 224 im Wegeventilgehäuse 232 entsprechend dem Ausführungsbeispiel nach Figur 5 über diametrale Abflachungen 248, 250 (Figur 8) und entsprechende Gegenkonturen der Federteller 238, 240.

Bei dieser Ausführungsform ist ein unterschiedlicher maximaler Hub des Schiebers 224 nach links und nach rechts verwirklicht. Dazu ist eine Hubbegrenzungshülse 252 vorgesehen, die sich am Adapter 230 abstützt, den linken Federteller 138 umgreift und sich entlang der Zentrierfeder 236 erstreckt. Bei einer Hubbewegung des Schiebers 224 nach rechts wird der linke Federteller 238 über die Ringflächenabschnitte 246 des Schiebers, 224 mitgenommen und entlang der Innenwandung 254 der Hubbegrenzungshülse 252 bewegt, bis er beim Erreichen des Maximalhubs nach rechts auf den rechten Federteller 240 aufläuft. Bei einer Bewegung des Schiebers 224 nach links, wird der rechte Federteller 240 über den Sicherungsring 244 mitgenommen, bis er federkappenseitig mit seinem rechten Federteller 240 auf die ihm zugewandte Ringstirnfläche 256 der Hubbegrenzungshülse 252 aufläuft. Somit ist der Maximalhub nach links durch die Hubbegrenzungshülse bestimmt, wodurch ein größerer maximaler Hub des Schiebers 224 nach rechts als nach links definiert ist.

Der freie Endabschnitt 222 des Schiebers 224 weist eine Axialbohrung 242 auf, in der eine Spannhülse 258 und ein als Stößel des stirnseitigen Elektromagneten 228 ausgebildeter Spanndorn 260 angeordnet ist. Der Spanndorn 260 ist in seiner Grundstellung durch eine Spannfeder 262 mit der Spannhülse 258 vorgespannt. Dabei ist die Spannhülse 258 radial nach außen erweitert und somit der Schieber 224 durch Reibschluß im Wegeventilgehäuse 232 festgelegt bzw. verriegelt. Die Spannhülse 258 ist über einen Flansch 274 rückseitig an der Federkappe 234 lagefixiert. Bei Bestromung des Elektromagneten 228 wird der Spanndorn 260 in die in Figur 7 dargestellte Freigabeposition überführt, so daß der Kraftschluß zwischen dem Spanndorn 260 und der Spannhülse 258 aufgehoben ist und der Schieber 224 frei bewegbar ist.

Es ist jedoch auch hier erwähnt, daß durch eine wie in Figur 5 beschriebene entsprechende geänderte Anordnung der Spannfeder 262 der Spanndorn 260 in seiner Freigabeposition vorspannbar und über die Ansteuerung des Elektromagneten 228 in eine Spannposition überführbar ist.

Der Spanndorn 260 weist zwei Spannkugeln 264, 266 auf, die bei einer Axialverschiebung des Spanndorns 260 ein Spreizen der Spannhülse 258 bewirken. Die Spannkugeln 264, 266 sind in einer radialen Vertiefung 272 des Spanndorn 260 und in zwei diametralen Ausnehmungen 268, 270 der Spannhülse 258 geführt (Figur 8).

Die Ausnehmungen 268, 270 der Spannhülse 258 sind stirnseitig in Innenumfangsflächenabschnitten 276, 278 orthogonal zur Trennebene T (Figur 8), zu der senkrecht die Spannhülse 258 durch den Spanndorn 260 erweiterbar ist, angeordnet und als Längsnuten mit schalenförmigen Nutgrund 280, 282 ausgebildet. Die Ausnehmungen 268, 270 sind in Richtung des Elektromagneten 228 radial erweitert, wobei in Freigabeposition die Spannkugeln 264, 266 etwa zu gleichen Teilen in die Ausnehmungen 268, 270 und in die radiale Vertiefung 272 des Spanndorns 260 eintauchen.

Die radiale Vertiefung 272 ist in einem Kopfabschnitt 286 des Spanndorns 260 wannenartig ausgebildet, wobei der Wannengrund 288 in Richtung des Elektromagneten 228 radial verjüngt ist, so daß in Längsrichtung L des Schiebers 224 betrachtet die Nutgrunde 280, 282 und der Wannengrund 288 etwa parallel zueinander verlaufen.

Bei einer axialen Bewegung des Spanndorns 260 nach' links - keine Bestromung des Elektromagneten 228 - wird der Spanndorn 260 aufgrund der Federkraft der Spannfeder 262 in Spannposition überführt, wobei sich der radiale Abstand zwischen den Nutgrunden 280, 282 und dem Wannengrund 288 verkleinert und die Spannhülse 258 durch die Spannkugeln 264, 266 senkrecht zur Trennebene T gespreizt wird, so daß der Spanndorn 260 über die Spannkugeln 264, 266 kraftschlüssig in der Spannhülse 258 festgelegt und der Schieber 224 in dem Wegeventilgehäuse 232 verriegelt ist. Bei einer axialen Verschiebung des Spanndorns 260 nach rechts - Bestromung des Elektromagneten 228 - wird der radiale Abstand zwischen den Nutgrunden 280, 282 und dem Wannengrund 288 vergrößert, wodurch die Spreizung der Spannhülse 258 und somit der Kraftschluß zwischen dem Spanndorn 260 und der Spannhülse 258 bzw. der Reibschluß zwischen der Spannhülse 258 und dem Schieber 224 aufgehoben wird. Dabei sind zur Mitnahme der Spannkugeln 264, 266 und zur Begrenzung einer Bewegung des Spanndorns 260 nach rechts bzw. zur genauen Definition der Freigabeposition die Spannkugeln 264, 266 axial zwischen gegenüberliegenden Stirnflächen 290, 292, 294 der Ausnehmungen 268, 270 und der radialen Vertiefung 272 geführt.

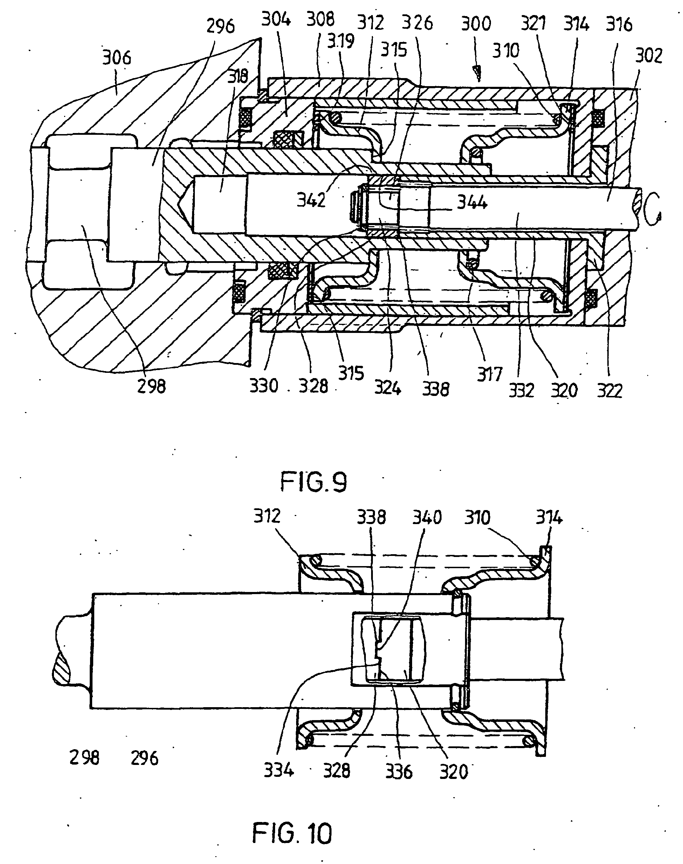

Figur 9 zeigt eine Ausführungsform einer Festlegeeinrichtung 300, die an einem freien Endabschnitts 296 eines Schieber 298 ausgebildet ist und mit einem Torquemotor 302 in Wirkverbindung steht.

Der freie Endabschnitt 296 ist in einer über einen Adapter 304 am Wegeventilgehäuse 306 angeordneten Federkappe 308 aufgenommen und über eine Zentrierfeder 310 axial vorgespannt. Die Zentrierfeder 310 erstreckt sich zwischen Federtellern 312, 314, die sich schieberseitig an diametralen Ringflächenabschnitten 315 und an einem in einer Ringnut (nicht dargestellt) geführten Sicherungsring 317 abstützen. Federkappenseitig liegen die Federteller 312, 314 an stirnseitigen Stützflächen 319, 321 an.

Eine Mitnahme der Federteller 312, 314, maximale Hubbegrenzungen des Schiebers 298 nach links und nach rechts im Wegeventilgehäuse 306 sowie eine Verdrehsicherung des Schiebers 298 im Wegeventilgehäuse 306 erfolgt gemäß der vorbeschriebenen Ausführungsform nach Figur 7.

Die Festlegeeinrichtung 300 weist eine Welle 316 in einer stirnseitigen Axialbohrung 318 des Schiebers 298 auf. Die Welle 316 ist im Mittelbereich 332 über eine zentrische Buchse 320 drehbar in der Axialbohrung 318 gelagert und mit dem Torquemotor 302, der stirnseitig außerhalb der Federkappe 308 angeordnet ist, verbunden. Die zentrische Buchse 320 ist über einen Flansch 322 an der Federkappe 308 rückseitig gelagert. Im Kopfbereich 324 hat die Welle 316 einen Exzenterabschnitt 326, auf dem eine exzentrische Buchse 328 gelagert und mittels eines Sprengrings 330 gesichert ist. Um die Reibung zwischen den Buchsen 320, 328 und der Welle 316 zu reduzieren, sind die Buchsen 320, 328 vorzugsweise auf der Welle 316 rollengelagert. Die beiden Buchsen 320, 328 berühren sich mit ihren zugewandten Stirnflächen 334, 336, wobei die exzentrische Buchse 328 mittels eines sich von der zentrischen Buchse 320 axial erstreckenden und in eine Nut 338 der exzentrischen Buchse 328 greifenden Vorsprungs 340 gegen Relativverdrehung gesichert ist (Figur 10).

In Grundstellung ist die Welle durch einer Radialfeder (nicht dargestellt) in eine Freigabeposition vorgespannt. Dabei wird die Welle 316 durch die Radialfeder mit einem Drehmoment beaufschlagt, so daß ein Verkeilen eines Außenumfangsabschnitts 342 der exzentrischen Buchsen 328 mit einem Innenumfangsabschnitt 344 der Axialbohrung nicht bewirkt wird und somit der Schieber 298 freigegeben ist. Bei Bestromung des Torquemotors 302 wird entgegen des Drehmoments der Radialfeder die Welle 316 mit einem Drehmoment beaufschlagt, so daß die exzentrischen Buchse 328 aus der Freigabeposition in eine kraftschlüssige Verbindung mit dem Schieber 298 bewegt wird und dieser somit verriegelt ist. Sobald die Bestromung aufgehoben wird, wirkt wieder das Drehmoment der Radialfeder auf die Welle 316, so daß durch Relativverdrehung der Welle 316 die exzentrische Buchse 328 in der Axialbohrung 318 des Schiebers 298 nicht mehr klemmt und somit der Schieber 298 freigegeben ist.

Bei den Ausführungsformen nach den Figuren 2 , 3 , 4 und 9 wird somit durch Bestromung eines Elektromagneten 72 bzw. eines Torquemotors 302 eine Verriegelung des Schiebers 68 herbeigeführt und eine Entriegelung aufgehoben, während bei den Ausführungsformen nach den Figuren 5, 6, 7 und 8 durch Bestromung eines Elektromagneten 168, 228 eine Verriegelung aufgehoben und eine Entriegelung herbeigeführt wird. Durch Umkehren des Spannprinzip kann jedoch an allen vorbeschriebenden Lösungen die Verriegelungswirkung umgekehrt werden.

Offenbart ist eine Verriegelungsvorrichtung zum Verriegeln eines Schiebers eines Wegeventils, mit einer mechanischen Festlegeeinrichtung zum Festlegen des Schiebers und mit einer manuellen Verschiebeeinrichtung zum Verschieben des Schiebers, wobei eine Verriegelung oder Entriegelung über ein elektrisches Signal aufhebbar ist.

### Bezugszeichenliste

- 2: wegeventilblock
- 4: erstes Wegeventil
- 6: zweites Wegeventil
- 8: drittes Wegeventil
- 10: viertes Wegeventil
- 12: Hydraulikzylinder
- 14: Hydraulikzylinder
- 16: Hydraulikzylinder
- 18: Hydraulikzylinder
- 20: Verriegelungsvorrichtung
- 22: Verschiebeeinrichtung
- 24: Schieber
- 26: Festlegeeinrichtung
- 27: Aufnahme
- 28: Seilzug
- 29: Festlegeeinrichtung
- 30: erster freier Endabschnitt
- 31: Festlegeeinrichtung
- 32: zweiter freier Endabschnitt
- 33: Festlegeeinrichtung
- 34: Bremse
- 36: Feder
- 38: Elektromagnet
- 40: manueller Schalter
- 41: Steuerleitung
- 42: elektrische Energiequelle
- 44: Hauptschalter
- 46: hydraulischer Druckschalter
- 48: Arbeitsleitung
- 50: Zentrierfeder
- 52: Zentrierfeder
- 54: Rasteinrichtung
- 56: Rastnut
- 58: Rastelement
- 60: Arbeitsleitung
- 62: hydraulischer Druckschalter
- 64: freier Endabschnitt
- 66: Wegeventilgehäuse
- 67: Umfangsbereich
- 68: Schieber
- 70: Festlegeeinrichtung
- 72: Elektromagnet
- 74: Adapter
- 76: Federkappe
- 78: Zentrierfeder
- 80: Stützring
- 82: Stützfläche
- 84: linker Federteller
- 86: rechter Federteller
- 88: Ringnut
- 90: Sicherungsring
- 92: Ringschulter
- 94: schieberseitige Federtellerfläche
- 96: schieberseitige Federtellerfläche
- 98: Kipphebel
- 100: Lasche
- 102: Lasche
- 103: Befestigungsschulter
- 104: Niete
- 105: Befestigungsschulter
- 106: Niete
- 108: adapterseitiger Befestigungsabschnitt
- 110: adapterseitiger Befestigungsabschnitt
- 112: Reibfläche
- 114: Reibfläche
- 116: Umfangsfläche
- 118: Umfangsfläche
- 120: Außenumfangsfläche
- 122: Außenumfangsfläche

- 124: Innenumfangsfläche
- 126: Innenumfangsfläche
- 128: Hubbegrenzungsfläche
- 130: Hubbegrenzungsfläche
- 132: Stirnfläche
- 134: Stirnfläche
- 136: Druckelement
- 138: Durchgangsbohrung
- 140: Kugel
- 142: Kugel
- 144: Druckaufnahme
- 146: Druckaufnahme
- 148: Druckfeder
- 150: Stößel
- 152: Öffnung
- 153: Bolzen
- 154: Spiralfeder
- 156: Federaufnahme
- 158: Justierschraube
- 160: Innengewindebohrung
- 162: freier Endabschnitt
- 164: Schieber
- 166: Festlegeeinrichtung
- 168: Elektromagnet
- 170: Adapter
- 172: Wegeventilgehäuse
- 174: Federkappe
- 176: Zentrierfeder
- 178: linker Federteller
- 180: rechter Federteller
- 182: Sicherungsring
- 184: Ringnut
- 186: Stützring
- 188: Ringflächenabschnitt
- 189: Ringstirnfläche
- 190: schieberseitige Federtellerfläche
- 191: Ringfläche
- 192: schieberseitige Federtellerfläche
- 193: Stützfläche
- 194: Außenumfangsflächenabschnitt
- 195: Stützfläche
- 196: Abflachung
- 198: Abflachung
- 200: Innenumfangsfläche
- 202: Innenumfangsfläche
- 204: Axialbohrung
- 205: Boden der Axialbohrung
- 206: Spannhülse
- 208: Spanndorn
- 210: innenkonusartiger Kopfabschnitt
- 212: Flansch
- 214: Kegelabschnitt
- 216: Spannfeder
- 218: Außenumfangsabschnitt
- 220: Innenumfangsabschnitt
- 222: freier Endabschnitt
- 224: Schieber
- 226: Festlegeeinrichtung
- 228: Elektromagnet
- 230: Adapter
- 232: Wegeventilgehäuse
- 234: Federkappe
- 236: Zentrierfeder
- 238: linke Federteller
- 240: rechte Federteller
- 242: Axialbohrung
- 244: Sicherungsring
- 246: Ringflächenabschnitt
- 247: Stützfläche
- 248: Abflachung
- 249: Stützfläche
- 250: Abflachung

- 252: Hubbegrenzungshülse
- 254: Innenwandung
- 256: Ringstirnfläche
- 258: Spannhülse
- 260: Spanndorn
- 262: Spannfeder
- 264: Spannkugel
- 266: Spannkugel
- 268: Ausnehmung
- 270: Ausnehmung
- 272: radiale Vertiefung
- 274: Flansch
- 276: Innenumfangsflächenabschnitt
- 278: Innenumfangsflächenabschnitt
- 280: Nutgrund
- 282: Nutgrund
- 286: Kopfabschnitt
- 288: Wannengrund
- 290: Stirnfläche
- 292: Stirnfläche
- 294: Stirnfläche
- 296: freier Endabschnitt
- 298: Schieber
- 300: Festlegeeinrichtung
- 302: Torquemotor
- 304: Adapter
- 306: Wegeventilgehäuse
- 308: Federkappe
- 310: Zentrierfeder
- 312: linke Federkappe
- 314: rechte Federkappe
- 315: Ringflächenabschnitt
- 316: Welle
- 317: Sicherungsring
- 318: Axialbohrung
- 319: Stützfläche
- 320: zentrische Buchse
- 321: Stützfläche
- 322: Flansch
- 324: Kopfbereich
- 326: Exzenterabschnitt
- 328: exzentrische Buchse
- 330: Sprengring
- 332: Mittelbereich
- 334: Stirnfläche
- 336: Stirnfläche
- 338: Nut
- 340: Vorsprung
- 342: Außenumfangsabschnitt
- 344: Innenumfangsabschnitt

## Patentansprüche

1. Verriegelungsvorrichtung zum Verriegeln eines Schiebers (68, 164, 224, 298) eines Wegeventils (4), mit einer mechanischen Festlegeeinrichtung (26, 70, 166, 300) zum Festlegen des Schiebers (68, 164, 224, 298) und mit einer manuellen Verschiebeeinrichtung (22) zum Verschieben des Schiebers (68, 164, 224, 298), **dadurch gekennzeichnet, dass** der Schieber (68, 164, 224, 298) in jeder gewünschten Position verriegelbar ist und die Verriegelung oder Entriegelung über ein elektrisches Signal aufhebbar ist.

2. Verriegelungsvorrichtung nach Patentanspruch 1, **dadurch gekennzeichnet, daß** ein Kipphebel (98) vorgesehen ist, der in Grundstellung den Schieber (68) freigibt und in Kippstellung den Schieber (58) reibschlüssig festlegt.

3. Verriegelungsvorrichtung nach Patentanspruch 2, **dadurch gekennzeichnet, daß** der Kipphebel (98) mit einem Elektromagneten (72) in Wirkverbindung steht, der bei Beaufschlagung mit dem elektrischen Signal die Kippstellung einleitet.

4. Verriegelungsvorrichtung nach Patentanspruch 1, **dadurch gekennzeichnet, daß** eine Spannhülse (206, 258) vorgesehen ist, die den Schieber (164, 224) kraftschlüssig festlegt.

5. verriegelungsvorrichtung nach Patentanspruch 4, **dadurch gekennzeichnet, daß** die Spannhülse (206, 258) in einer Axialbohrung (204, 242) des Schiebers (164, 224) angeordnet ist und ein Spanndorn (208, 260) in der Spannhülse (206, 258) aufgenommen ist, der mittels einer Spannfeder (216, 262) vorgespannt ist und mittels eines Elektromagneten (168, 228) gegen die Kraft der Spannfeder (216, 262) in Freigabeposition oder Spannposition bringbar ist.

6. Verriegelungsvorrichtung nach Patentanspruch 5, **dadurch gekennzeichnet, daß** der Spanndorn (208) einen Kegelabschnitt (214) hat.

7. Verriegelungsvorrichtung nach Patentanspruch 5, **dadurch gekennzeichnet, daß** der Spanndorn (260) Spannkugeln (264, 266) in einer radialen Verjüngung (272) hat.

8. Verriegelungsvorrichtung nach Patentanspruch 1, **dadurch gekennzeichnet, daß** in einer Axialbohrung (318) des Schiebers (298) eine Welle (316) mit einem Exzenterabschnitt (326) und einer exzentrischen Buchse (328) gelagert ist, wobei durch Relativverdrehung der Welle (316) ein Außenumfangsabschnitt (342) der exzentrischen Buchse (328) mit einem Innenumfangsabschnitt (344) der Axialbohrung (318) des Schiebers (298) klemmt.

9. Verriegelungsvorrichtung nach Patentanspruch 8, **dadurch gekennzeichnet, daß** die exzentrische Buchse (328) mittels einer Radialfeder vorgespannt ist und mittels eines Torquemotors (302) gegen die Kraft der Radialfeder in Freigabepositon oder Spannposition bringbar ist.

10. Verriegelungsvorrichtung nach Patentanspruch 7, **dadurch gekennzeichnet, daß** die exzentrischen Buchse (328) durch eine zentrische auf der Welle (316) gelagerte Buchse (320) gegen Verdrehungen gesichert ist.

11. Verriegelungsvorrichtung nach einem der vorhergehenden Patentansprüche, **dadurch gekennzeichnet, daß** der Schieber (68, 164, 224, 298) eine Verdrehsicherung zum Verhindern von Drehungen im Wegeventilgehäuse (66, 172, 232, 306) hat.

12. Verriegelungsvorrichtung nach einem der vorhergehenden Patentansprüche, **dadurch gekennzeichnet, daß** der Schieber (68) ein Druckelement (136) zur Erzeugung eines mechanisches Druckpunkts hat, der bei Schaltung des Wegeventils (4) in seine Freigangsstellung zu überwinden ist.

13. Verriegelungsvorrichtung nach einem der vorhergehenden Patentansprüche, **dadurch gekennzeichnet, daß** in einer hydraulischen Arbeitsleitung (48, 60) ein Druckschalter (46, 62) zur Meldung eines hydraulischen Schwellendrucks als elektrisches Signal vorgesehen ist, so daß eine Verriegelung automatisch aufhebbar oder aktivierbar ist.

14. Verriegelungsvorrichtung nach einem der vorhergehenden Patentansprüche, **dadurch gekennzeichnet, daß** über einen Hauptschalter (44) alle Verrieglungen aufhebbar sind und **dadurch** alle Wegeventile (4, 6, 8, 10) in ihre Grund- bzw. Freigangsstellung übergehen.

## Claims

1. Locking device for locking a slide (68, 164, 224, 298) of a directional control valve (4), having a mechanical securing device (26, 70, 166, 300) for securing the slide (68, 164, 224, 298) and having a manual displacement device (22) for displacing the slide (68, 164, 224, 298), **characterised in that** the slide (68, 164, 224, 298) can be locked in any desired position and the locking or releasing operation can be deactivated by means of an electrical signal.

2. Locking device according to patent claim 1, **characterised in that** a tilting lever (98) is provided which releases the slide (68) in the initial position and secures the slide (68) in a frictionally engaging manner in the tilted position.

3. Locking device according to patent claim 2, **characterised in that** the tilting lever (98) is operationally connected to an electromagnet (72) which initiates the tilted position when acted upon by the electrical signal.

4. Locking device according to patent claim 1, **characterised in that** a clamping sleeve (206, 258) is provided which secures the slide (164, 224) in a non-positive-locking manner.

5. Locking device according to patent claim 4, **characterised in that** the clamping sleeve (206, 258) is arranged in an axial hole (204, 242) of the slide (164, 224) and a clamping mandrel (208, 260) is received in the clamping sleeve (206, 258), which clamping mandrel is biased by means of a clamping spring (216, 262) and can be brought into a release position or clamping position counter to the force of the clamping spring (216, 262) by means of an electromagnet (168, 228).

6. Locking device according to patent claim 5, **characterised in that** the clamping mandrel (208) has a conical portion (214).

7. Locking device according to patent claim 5, **characterised in that** the clamping mandrel (260) has clamping balls (264, 266) in a radial tapering portion (272).

8. Locking device according to patent claim 1, **characterised in that** a shaft (316) having a cam portion (326) and an eccentric sleeve (328) is arranged in an axial hole (318) of the slide (298), an outer peripheral portion (342) of the eccentric sleeve (328) clamping with an inner peripheral portion (344) of the axial hole (318) of the slide (298) by means of relative rotation of the shaft (316).

9. Locking device according to patent claim 8, **characterised in that** the eccentric sleeve (328) is biased by means of a radial spring and can be brought into a release position or clamping position counter to the force of the radial spring by means of a torque motor (302).

10. Locking device according to patent claim 7, **characterised in that** the eccentric sleeve (328) is secured against rotations by means of a central sleeve (320) which is arranged on the shaft (316).

11. Locking device according to any one of the preceding patent claims, **characterised in that** the slide (68, 164, 224, 298) has a rotation prevention device for preventing rotations in the directional control valve housing (66, 172, 232, 306).

12. Locking device according to any one of the preceding patent claims, **characterised in that** the slide (68) has a pressure element (136) for producing a mechanical pressure point which has to be overcome when the directional control valve (4) is switched to the freely moving position thereof.

13. Locking device according to any one of the preceding patent claims, **characterised in that**, in a hydraulic operating line (48, 60), there is provided a pressure switch (46, 62) for signalling a hydraulic threshold pressure as an electrical signal so that a locking operation can be automatically deactivated or activated.

14. Locking device according to any one of the preceding patent claims, **characterised in that** all the locking operations can be deactivated by means of a main switch (44) and all the directional control valves (4, 6, 8, 10) thereby switch into their initial or freely moving position.

## Revendications

1. Dispositif de verrouillage pour le verrouillage d'un tiroir (68, 164, 224, 298) d'un distributeur (4), avec un dispositif de blocage mécanique (26, 70, 166, 300) pour le blocage du tiroir (68, 164, 224, 298) et avec un dispositif de déplacement manuel (22) pour le déplacement du tiroir (68, 164, 224, 298), **caractérisé en ce que** le tiroir (68, 164, 224, 298) peut être verrouillé dans toute position désirée et le verrouillage ou le déverrouillage peut être levé par un signal électrique.

2. Dispositif de verrouillage selon la revendication 1, **caractérisé en ce qu'**il est prévu un levier basculant (98) qui, en position initiale, libère le tiroir (68) et, en position basculée, bloque le tiroir (68) par friction.

3. Dispositif de verrouillage selon la revendication 2, **caractérisé en ce que** le levier basculant (98) est en liaison active avec un électroaimant (72), qui engendre la position basculée en appliquant le signal électrique.

4. Dispositif de verrouillage selon la revendication 1, **caractérisé en ce qu'**il est prévu une douille de serrage (206, 258), qui bloque le tiroir (164, 224) par force.

5. Dispositif de verrouillage selon la revendication 4, **caractérisé en ce que** la douille de serrage (206, 258) est disposée dans un alésage axial (204, 242) du tiroir (164, 224) et **en ce qu'**un mandrin de serrage (208, 260) est logé dans la douille de serrage (206, 258), lequel est précontraint au moyen d'un ressort de serrage (216, 262) et peut être amené en position de libération ou en position de serrage au moyen d'un électroaimant (168, 228) contre la force du ressort de serrage (216, 262).

6. Dispositif de verrouillage selon la revendication 5, **caractérisé en ce que** le mandrin de serrage (208) comporte une partie conique (214).

7. Dispositif de verrouillage selon la revendication 5, **caractérisé en ce que** le mandrin de serrage (260) comporte des billes de serrage (264, 266) dans un rétrécissement radial (272).

8. Dispositif de verrouillage selon la revendication 1, **caractérisé en ce qu'**un arbre (316), avec une partie excentrique (326) et un coussinet excentrique (328), est supporté dans un alésage axial (318) du tiroir (298), dans lequel une partie périphérique extérieure (342) du coussinet excentrique (328) se bloque sur une partie périphérique intérieure (344) de l'alésage axial (318) du tiroir (298) par une rotation relative de l'arbre (316).

9. Dispositif de verrouillage selon la revendication 8, **caractérisé en ce que** le coussinet excentrique (328) est précontraint au moyen d'un ressort radial et peut être amené en position de libération ou en position de serrage au moyen d'un moteur de torsion (302) contre la force du ressort radial.

10. Dispositif de verrouillage selon la revendication 7, **caractérisé en ce que** le coussinet excentrique (328) est calé contre la rotation par un coussinet centré (320) monté sur l'arbre (316).

11. Dispositif de verrouillage selon l'une quelconque des revendications précédentes, **caractérisé en ce que** le tiroir (68, 164, 224, 298) comporte une sécurité de rotation pour empêcher sa rotation dans le boîtier du distributeur (66, 172, 232, 306).

12. Dispositif de verrouillage selon l'une quelconque des revendications précédentes, **caractérisé en ce que** le tiroir (68) comporte un élément de pression (136) pour produire un point de pression mécanique, qui doit être franchi lors de la commutation du distributeur (4) dans sa position de libre passage.

13. Dispositif de verrouillage selon l'une quelconque des revendications précédentes, **caractérisé en ce qu'**il est prévu, dans une conduite de travail hydraulique (48, 60), un commutateur à pression (46, 62) pour l'envoi d'une pression de seuil hydraulique comme signal électrique, de telle façon qu'un verrouillage puisse être désactivé ou activé automatiquement.

14. Dispositif de verrouillage selon l'une quelconque des revendications précédentes, **caractérisé en ce que** tous les verrouillages peuvent être désactivés par un commutateur principal (44) et tous les distributeurs (4, 6, 8, 10) reviennent ainsi dans leur position initiale ou leur position de libre passage.
